# EUROPEAN PATENT APPLICATION

(11) **EP 1 607 349 A1**
(43) Date of publication of application: **21.12.2005**
(21) Application number: 05076153.5
(22) Date of filing: 18.05.2005
(51) Int. Cl.: B65G 15/64, B65G 15/46

(54) **Belt conveyor**

(30) Priority: 26.05.2004 NL 1026266
(71) Applicant: R.N. Machinebouw B.V., 9206 AA Drachten (NL)
(72) Inventor: Nicolai, Roel, 9206 AA Drachten (NL)

(57) **Abstract**

The invention relates to a belt conveyor for transporting goods, consisting of at least one conveyor belt (3) and two rollers (1,2). In order to stabilise the movement of the conveyor belt (3) in a direction perpendicular to the transport direction and possibly also in the transport direction, a bottom side of the conveyor belt (3) is provided with a row of projections (4) and the rollers are each provided with a groove (5,6) via which the row of projections (4) may pass.

## Description

The invention relates to a belt conveyor for transporting goods into a given transport direction, comprising a conveyor belt and two or more rollers over which the conveyor belt can be moved.

A belt conveyor of this type is well known and is used in substantially every branch of industry. The problem with the known belt conveyor is that the conveyor belt may develop transverse movements, caused for example by pollution, temperature differences or an asymmetrical loading, which results in the conveyor belt running unquiet, producing noise and showing excessive wear. This especially takes place when the conveyor belt is loaded asymmetrically. For small lengths and in situations where the belt conveyor is not filthy, the rollers over which the conveyor belt runs may have some stabilising effect, especially when they are slightly spherically shaped, but for larger lengths this effect is of less importance. For some applications, it is moreover important that the speed of the conveyor belt is constant and that it shows no slip, which cannot be guaranteed with the known conveyor belts.

The inventive belt conveyor substantially obviates these disadvantages and is according to an aspect of the invention characterised in that it is provided with stabilisation means, for stabilising movements of the conveyor belt.

A favourable embodiment of the inventive belt conveyor which gives a significant improvement with respect to sideward movements, especially for relatively short conveyor belts, is characterised in that the stabilisation means comprise at least one row of projections, mounted parallel to the transport direction underneath the conveyor belt, and at least one groove in each roller, via which the at least one row of projections may pass. If the projections are spaced relatively close together, so that for each roller always at least one projection will be in the grove, it will be virtually impossible for the conveyor belt to run off the rollers.

A favourable embodiment is according to another aspect of the invention characterised in that the belt conveyor moreover comprises a chute, supporting the conveyor belt, via which the at least one row of projections may pass. The supporting chute is preferably constructed such that a stabilising effect will be obtained not only near the ends of the conveyor belt but over its entire length instead. One may also force the projections of the returning part of the conveyor belt to move through a slot, so that sideward movements cannot develop in this part either.

A further embodiment which may be realised relatively easy is characterised in that the supporting chute is plate-shaped and provided with at least one groove extending in the transport direction, through which the at least one row of projections can pass.

A further favourable embodiment which may be employed in combination with a conveyor belt having precisely one row of projections is characterised in that in a cross section, perpendicular to the transport direction, the supporting chute is trough-shaped and is made up of two trough halves made of sheet material, between which a recess is left open via which one row of projections may pass.

A favourable alternative embodiment is characterised in that in a cross section perpendicular to the transport direction, the supporting chute is trough-shaped or V-shaped and is made up of systems of rolls, made such that at least one row of projections may pass between them.

A further favourable embodiment which may be used when a possible rotation of the projections round their longitudinal axis is not a problem is characterised in that the projections are at least substantially cylindrically shaped.

A favourable embodiment is according to a further aspect of the invention characterised in that at least one roller is a squirrel-cage roller, the bars of which will take along the projections, so that a constant speed of the conveyor belt can be guaranteed. In this embodiment the projections are preferably at least substantially plate-shaped, so that they fit neatly between the bars. By covering the space between the bars next to the projections, a stabilisation in the transport direction and perpendicular to the transport direction can be obtained.

A further favourable embodiment for which on the one hand the friction between the projections and the rollers and possibly the support is minimised and on the other hand a long life span for the belt conveyor can be obtained is characterised in that the projections are made of bronze, preferably a wear-resistant bronze alloy, like phosphor bronze CuSn8.

A further favourable embodiment for which it is substantially ruled out that a projection will start to rotate round its longitudinal axis is characterised in that a side of a projection which is operationally mounted against the conveyor belt is provided with at least one at least substantially radially extending grove.

A further favourable embodiment for which projections can be easily replaced if desired is characterised in that each of the projections is connected to the conveyor belt with a screwed joint.

A further favourable embodiment with which the friction between the groove and the projections may be further reduced is characterised in that the projection consists of a roll, mounted onto a pin.

The invention also relates to a conveyor belt, provided with projections, as part of a belt conveyor as described in the previous paragraphs

The invention also relates to a projection, as part of a belt conveyor as described in the previous paragraphs.

The invention will now be further explained, with a reference to the following figures, in which:
- Fig. 1A: schematically shows a belt conveyor according to the state of the art in side view;
- Fig. 1B: schematically shows a belt conveyor according to the invention in side view;
- Fig. 2A: shows more in detail a possible embodiment of a roller in front view;
- Fig. 28: shows this embodiment more in detail in side view;

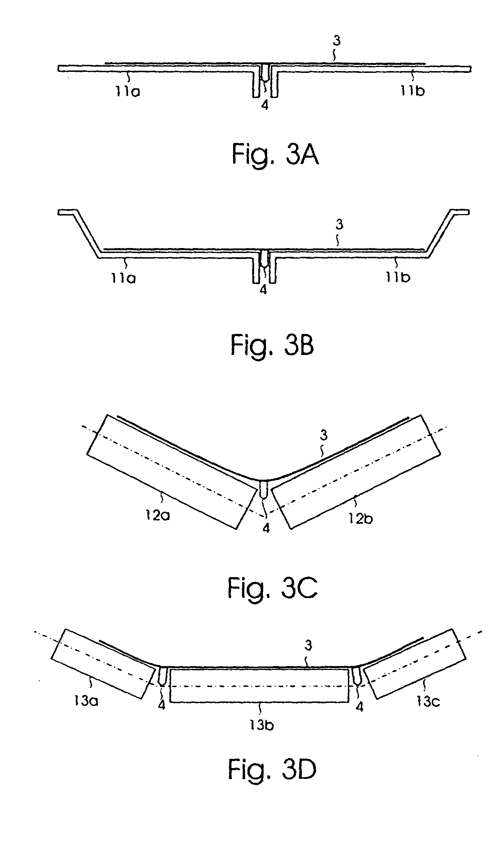

- Fig. 3A: schematically shows a possible embodiment of a support in cross section;
- Fig. 3B: schematically shows an alternative embodiment of a support in cross section;
- Fig. 3C: schematically shows an embodiment of a support with rollers in cross section;
- Fig. 3D: schematically shows an alternative embodiment of a support with rollers in cross section;

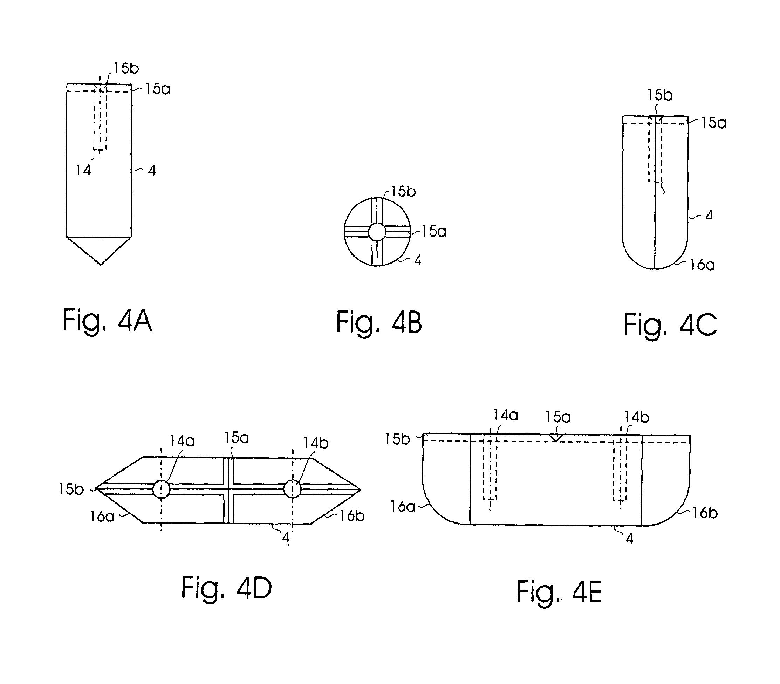

- Fig. 4A: schematically shows a possible embodiment of a projection in front view;
- Fig. 4B: schematically shows this projection in top view;
- Fig. 4C: schematically shows an alternative embodiment of a projection in front view;
- Fig. 4D: schematically shows this projection in top view;
- Fig. 4E: schematically shows this projection in side view;

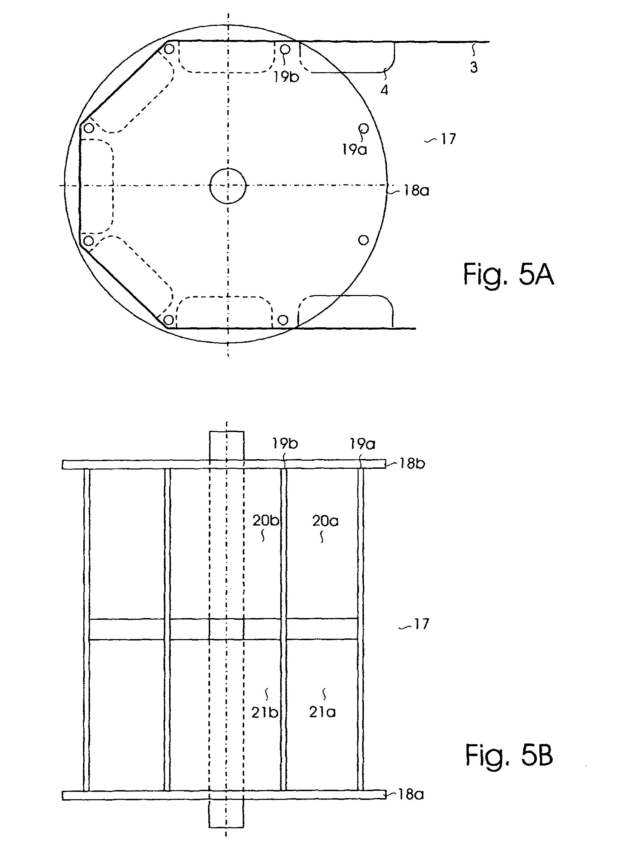

- Fig. 5A: schematically shows a squirrel-cage roller in side view;
- Fig. 5B: schematically shows this roller in top view;

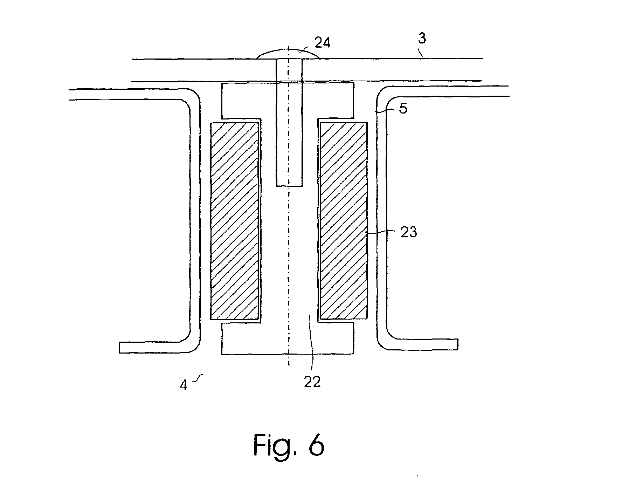

- Fig. 6: schematically shows a projection constructed as a roll mounted on a pin in cross section.

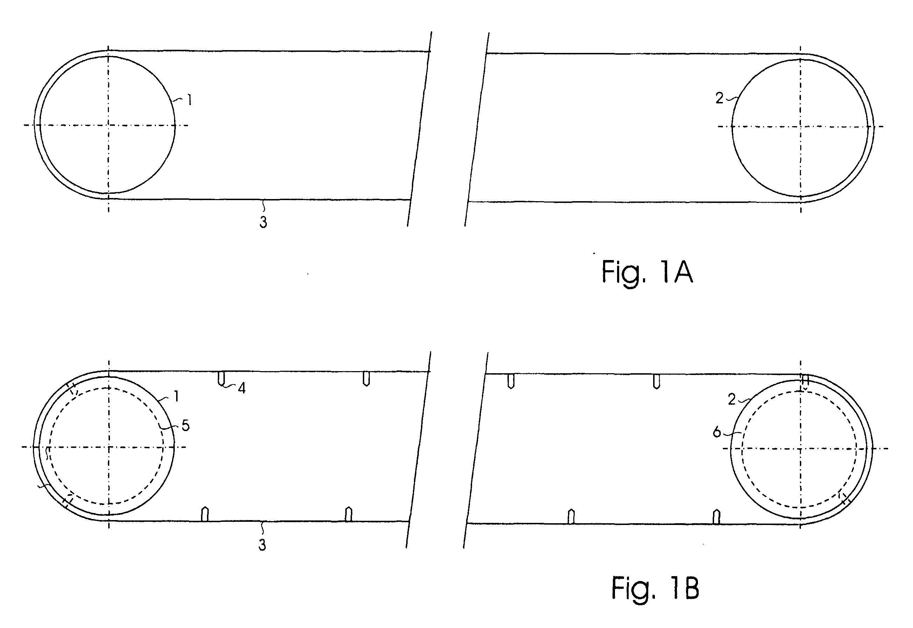

Fig. 1A schematically shows a belt conveyor according to the invention in side view, in its simplest shape consisting of a first roller 1, a second roller 2 and a conveyor belt 3 which can move across the rollers. At least one of the rollers is driven by a motor, not shown in the figure. Fig. 1B schematically shows a belt conveyor according to the invention in side view, also consisting of a first roller 1, a second roller 2 and a conveyor belt 3 which can move across the rollers, but centrally in conveyor belt 3 projections 4 are mounted, which may pass roller 1 via a groove 5 and second roller 2 via a groove 6 without any problem. The distance between the projections 4 is chosen such that at least one projection 5 will be in groove 5 and at least one projection 4 in groove 6. In this way it is prevented that conveyor belt 3 will run off rollers 1,2. Rollers 1,2 are usually made of steel and projections 4 are for example made of wear-resistant bronze, thanks to which the friction coefficient of conveyor belt 3 will practically not increase and wear will practically not occur. Conveyor belt 3 is usually made of wear-resistant, reinforced rubber or of a synthetic material. Projections 4 may be mounted during fabrication of conveyor belt 3, but they may also be mounted afterwards onto conveyor belt 3 with the aid of a screwed joint.

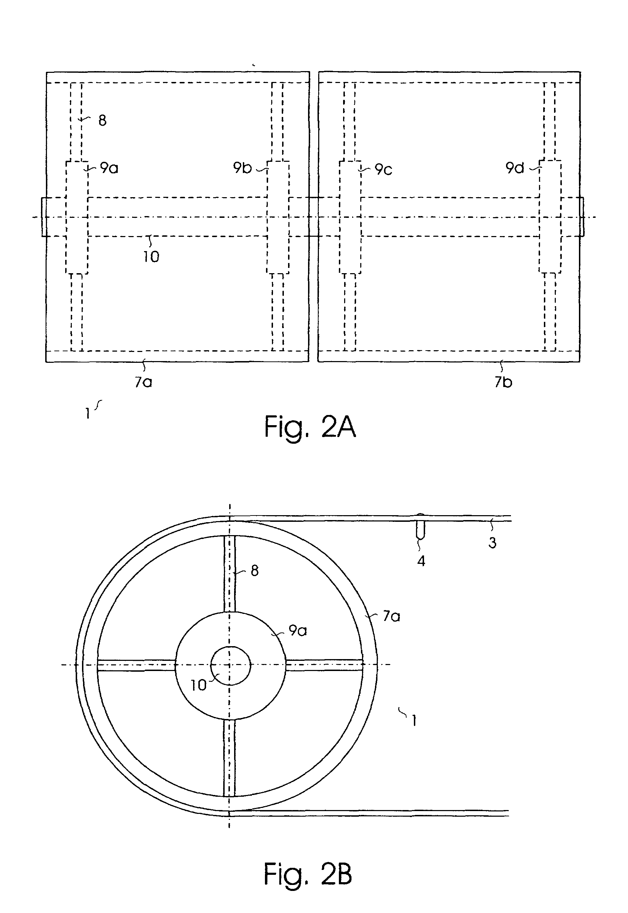

Fig. 2A shows more in detail a possible embodiment of a roller 1 in front view. Roller 1 consists of two cylinders 7a,7b which are mounted for rotation onto a shaft 10 with the aid of spokes 8 and bearings 9a,9b,9c,9d. Between cylinders 7a,7b a space is left open via which projections 4, mounted onto conveyor belt 3, may pass. Fig. 2B shows this embodiment more in detail in side view, with cylinder 7a, spokes 8, bearing 9a, conveyor belt 3 and projections 4. Thanks to the open structure, roller 1 can easily be cleaned, for example with the aid of compressed air, so that sufficient space will remain available between cylinders 7a,7b for letting pass projections 4.

Fig. 3A schematically shows a possible embodiment of a support in cross section, consisting of two support plates 11a, 11b bent at right angles, which are mounted onto a support, not shown in the figure, and which are positioned such that a space remains free' for letting pass projections 4 mounted onto conveyor belt 3. The effect is that conveyor belt 3 is supported not only near rollers 1,2, but in fact across its entire supporting length. Fig. 3B schematically shows an alternative embodiment of a support in cross section, where plates 11a, 11b have been bent in such a way that a trough-shaped supporting chute is obtained with the plates being placed such that a space remains free for letting pass projections 4 mounted onto conveyor belt 3. Fig. 3C schematically shows an embodiment of a support with rollers 12a,12b in cross section. Rollers 12a,12b again have been placed such that a space remains free for letting pass projections 4 mounted onto conveyor belt 3. Every time a projection 4 passes between a set of rollers, the position of conveyor belt 3 will be corrected if necessary. Fig. 3D schematically shows an alternative embodiment of a support with rollers 13a,13b,13c which is known as such, between which two spaces remain free via which two rows of projections 4 mounted onto conveyor belt 3 may pass.

Fig. 4A schematically shows a possible embodiment of a projection 4 in front view, consisting of a cylindrically shaped piece of bronze, provided with a central threaded boring 14. If desired, projection 4 may be provided with a pointed end on its bottom side, as a result of which projection 4 will be somewhat self-seeking. On its top side, which operationally adjoins conveyor belt 3, projection 4 is provided with radially extending grooves 15a,15b. With the aid of a screw, for example a low round-headed flange screw, projection 4 is connected to conveyor belt 3, in the process of which flexible material of conveyor belt 3 will enter groves 15a,15b, which prevents projection 4 from rotating during use. Fig. 4B schematically shows this projection in top view, with boring 14 and grooves 15a,15b. Fig. 4C schematically shows an alternative embodiment of a plate-shaped projection 4 in front view, consisting of a rectangular piece of bronze, provided with threaded borings 14a,14b, of which only boring 14a is visible in the figure. The front side and back side of projection 4 have pointed ends 16a,16b, of which only pointed end 16a is visible in the figure, which makes projection 4 self-seeking. On its top side, which operationally adjoins conveyor belt 3, projection 4 is provided with radially extending grooves 15a,15b. With the aid of a screw, for example a low round-headed flange screw, projection 4 is connected to conveyor belt 3, in the process of which flexible material of conveyor belt 3 will enter groves 15a,15b, which prevents projection 4 from rotating during use. Fig. 4D schematically shows this projection in top view, with borings 14a,14b, groves 15a,15b and pointed ends 16a,16b. Fig. 4E schematically shows this projection in side view, with borings 14a,14b, groves 15a,15b and pointed ends 16a,16b.

Fig. 5A schematically shows a squirrel-cage roller 17 in side view, consisting of flanges 18a, 18b, of which only flange 18a is visible in the figure, between which bars 19a, 19b,.. are mounted over which conveyor belt 3 is led. Plate-shaped projections 4, mounted centrally onto conveyor belt 3, fit precisely between bars 19a, 19b,.. as a result of which the speed of the conveyor belt is completely determined by the peripheral speed of roller 17. Fig. 5B schematically shows roller 17 in top view, consisting of flanges 18a, 18b,.. between which bars 19a,19b are mounted over which conveyor belt 3, not shown in the figure, is led. Between bars 19a, 19b,.. metal plates 20a, 20b,.. and 21a, 21b,.. are mounted, so that between plates 20a, 20b,.. and 21a, 21b,.. a space is left open for letting pass projections 4. In this way, a sideward movement of the projections 4 mounted centrally to conveyor belt 3 is limited, as a result of which also a stabilisation in a sideward direction is obtained for conveyor belt 3.

Fig. 6 schematically shows in cross section a projection 4 constructed as a roller 23, shaded in the figure, mounted for rotation on a pin 22. Pin 22 mounted to a conveyor belt 3 with a screw 24 and roller 23 will start to rotate round pin 22 as soon as roller 23 contacts a side of groove 5, therewith reducing friction and wear to a minimum.

## Claims

1. Belt conveyor for transporting goods into a given transport direction, comprising a conveyor belt and two or more rollers over which the conveyor belt can be moved, **characterised in that** the belt conveyor is provided with stabilisation means, for stabilising movements of the conveyor belt.

2. Belt conveyor according to claim 1, **characterised in that** the stabilisation means comprise at least one row of projections, mounted parallel to the transport direction underneath the conveyor belt, and at least one groove in each roller, via which the at least one row of projections may pass.

3. Belt conveyor according to claim 2, **characterised in that** the belt conveyor moreover comprises a chute, supporting the conveyor belt, via which the at least one row of projections may pass.

4. Belt conveyor according to claim 3, **characterised in that** the supporting chute is plate-shaped and provided with at least one groove extending in the transport direction.

5. Belt conveyor according to claim 3, **characterised in that** in a cross section, perpendicular to the transport direction, the supporting chute is trough-shaped and is made up of two trough halves made of sheet material, between which a recess is left open via which one row of projections may pass.

6. Belt conveyor according to claim 3, **characterised in that** in a cross section perpendicular to the transport direction, the supporting chute is trough-shaped or V-shaped and is made up of systems of rolls, made such that at least one row of projections may pass between them.

7. Belt conveyor according to one of the previous claims, **characterised in that** the projections are at least substantially cylindrically shaped.

8. Belt conveyor according to claim 1, **characterised in that** at least one roller is a squirrel-cage roller.

9. Belt conveyor according to claim 8, **characterised in that** the projections are at least substantially plate-shaped.

10. Belt conveyor according to claim 7 or 9, **characterised in that** the projections are made of bronze.

11. Belt conveyor according to claim 10, **characterised in that** a side of a projection which is operationally mounted against the conveyor belt is provided with at least one at least substantially radially extending grove.

12. Belt conveyor according to one of the previous claims, **characterised in that** each of the projections is connected to the conveyor belt with a screwed joint.

13. Belt conveyor according to claim 7, **characterised in that** the projection consists of a roll, mounted onto a pin.

14. Conveyor belt, provided with projections, as part of a belt conveyor according to one of the previous claims.

15. Projection, as part of a belt conveyor according to one of the claims 2 to 13.
